# EUROPEAN PATENT SPECIFICATION

(11) **EP 3 960 433 B1**
(45) Date of publication and mention of the grant of the patent: **19.07.2023**
(21) Application number: 21193828.7
(22) Date of filing: 30.08.2021
(51) Int. Cl.: B29D 30/00, B29D 30/06

(54) **METHOD AND APPARATUS FOR MEASURING RADIAL FORCE DURING TIRE BUILDING**
VERFAHREN UND VORRICHTUNG ZUR MESSUNG DER RADIALEN KRAFT WÄHREND DES REIFENAUFBAUS
PROCÉDÉ ET APPAREIL POUR MESURER LA FORCE RADIALE PENDANT LA FABRICATION D'UN PNEU

(30) Priority: 28.08.2020 US 202063071658 P
(43) Date of publication of application: 02.03.2022
(73) Proprietor: The Goodyear Tire & Rubber Company, Akron, OH 44316 (US)
(72) Inventor: DEUIL, Marie Isabelle, F-80080 Amiens (FR); COTTE, Fabien, F-80670 Pernois (FR); GAMBIER, Dany, F-80470 Argoeuves (FR); LEGROS, Jean-Francois, F-80080 Amiens (FR); DE FROBERVILLE, Colomban Huet, F-75017 Paris (FR); RULLE, Gregory, F-80000 Amiens (FR)
(74) Representative: Kutsch, Bernd

(56) References cited:
- EP-A2- 0 813 952
- US-A1- 2006 048 884
- US-A1- 2008 282 799

## Description

### Field of the Invention

The invention relates generally to a method and an apparatus for measuring radial force during the formation of a green tire and, more specifically, to a method and apparatus for measuring and controlling the formation of a green tire during component-by-component tire build-up in order to attain desired finished tire geometry and uniformity.

### Background of the Invention

It is a desired objective in tire manufacturing to carefully control the formation of a precured or green tire so as to reduce tire imbalance and maximize tire uniformity. Prior art measurements of tire balance and uniformity are typically made after the tire has been cured to ensure the tire has met acceptable quality specifications and parameters. Tires that do not meet preset specifications relating to uniformity and geometry are typically scrapped, resulting in costly waste.

Patent document EP 0 813 952 A2 discloses the essential features of the respective preambles of independent claims 1 and 9.

Thus, it is desired to have an improved way of measuring tire nonuniformity, such as radial force variation in order to improve the tire building process and to measure the nonuniformity during the tire building process in real time, and to avoid the scrapping of tires.

### Summary of the Present Invention

The invention relates to a method in accordance with claim 1 and to an apparatus in accordance with claim 9.

Dependent claims refer to preferred embodiments of the invention.

In a preferred aspect of the invention, a method of determining the force variation on a green tire is described. The method includes the steps of: forming a green tire having a tread and belt assembly, stitching the outer surface of the tread using a pressure roller and measuring the radial force by a sensor mounted in the pressure roller.

In a preferred aspect of the invention, an apparatus for building tires and measuring the force variation on a green tire is described. The apparatus includes a tire building drum, and a stitching device, wherein the stitching device includes a pressure roller rotatably mounted in a first and second bearing located on each end of the pressure roller, and a first and second axle sensor, each axle sensor having a spindle mounted within a respective bearing for measuring the forces on the pressure roller.

### Definitions

"Axial" and "axially" means the lines or directions that are parallel to the axis of rotation of the tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of the tire.

### Brief Description of the Drawings

The invention will be described by way of example and with reference to the accompanying drawings in which:
FIG. 1 is a front view of a typical tire building machine;

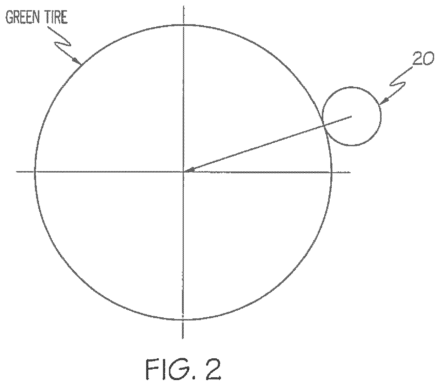

Fig. 2 is a schematic side view of a tire drum and stitcher roller for stitching and radial force measurement operation performed on a green tire assembly mounted on a drum just after the tread has been applied;
FIG. 3 illustrates the radial force on a green tire assembly during rotation;
FIG. 4a illustrates a stitcher roller and sensor assembly, Fig. 4b illustrates a front view of the axle sensor assembly for measuring radial forces, and Fig. 4C illustrates a cross-sectional view of a stitcher roller and axle sensor assembly;
FIG. 5 illustrates the stitching roller and sensor assembly mounted in a transfer ring apparatus; and
FIGS. 6A and 6B illustrate a first and second example radial force measurement on a first and second green tire compared with a radial force measurement of the cured tire.

### Detailed Description of Example Embodiments of the Invention

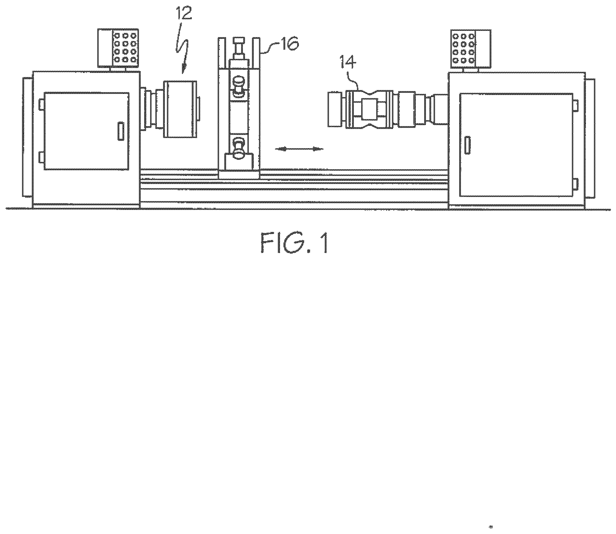

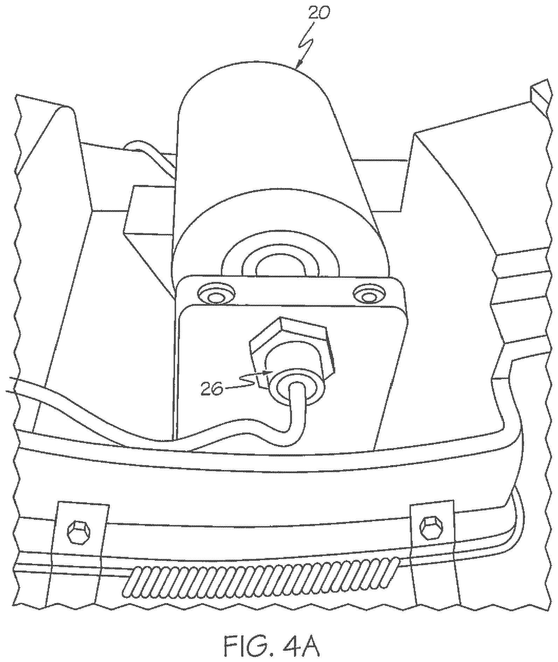

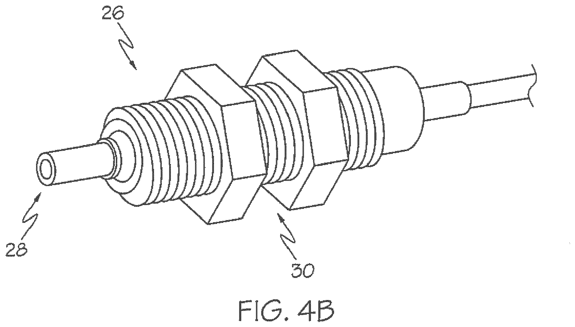

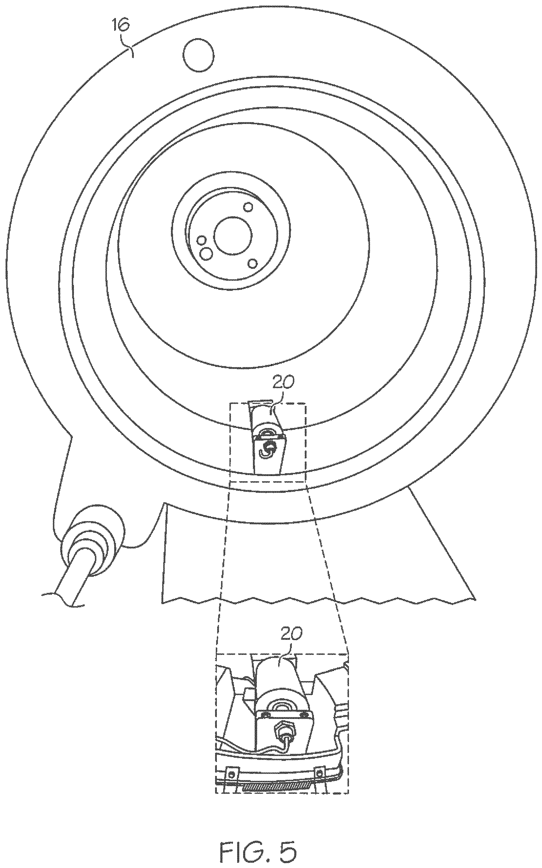

The manufacture of a pneumatic tire typically involves a tire building machine such as the one shown in Figure 1. The tire manufacture process typically includes the steps of forming a first stage tire carcass using a tire building drum 14. Multiple layers of tire components are applied onto the tire building drum 14 to form a first stage tire carcass that is cylindrical in shape. The tire components typically include an inner liner, body ply, tire beads and sidewalls. A second tire building drum often referred to as a belt and tread or B&T drum 12 is used to form an integrated tread and belt package (hereinafter "tread ring"). A transfer ring 16 is used to pick up the tread ring from the belt drum and transfer it onto the outer circumference of the first stage carcass. The first stage carcass is then inflated into a toroidal shape inside of the belt and tread package. Next, the tread and belt package is stitched by the application of a pressure roller 20 onto the carcass. The pressure roller commonly referred to as a stitcher roller 20, functions to apply sufficient pressure to ensure that the tread and belt package is sufficiently adhered to the outer circumferential surface of the green carcass. As shown in Figure 4a and 5, the stitcher roller 20 may be located inside the transfer ring. Thus, the stitching operation may occur after the transfer ring has transferred the tread and belt package onto the carcass, and before the transfer ring moves back to its position. As the green tire with tread rotates on the drum 12, the stitcher roller 20 engages the tread. Measurement of the radial force occurs by the stitcher roller 20 applying a force to the tread of the uncured tire as the tire rotates.

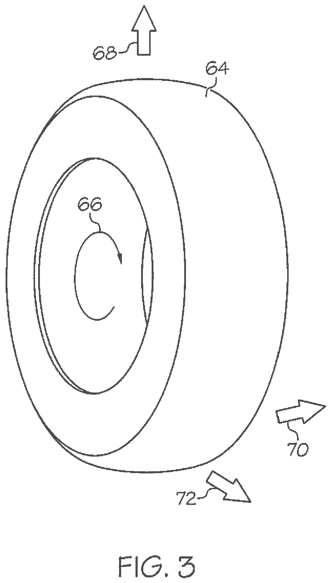

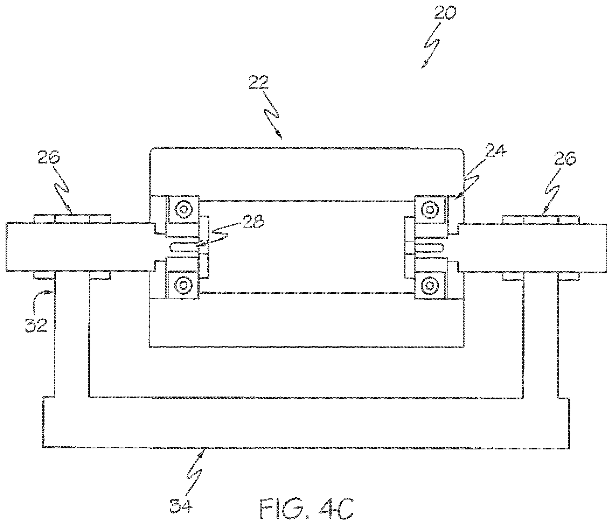

Figure 4C illustrates a cross-sectional view of the stitcher roller and sensor assembly 20. The stitcher roller and sensor assembly 20 includes a cylindrically shaped pressure roller 22 that is rotatably mounted on journal bearings 24 located on each end of the stitcher roll. Positioned in each journal bearing 24 is an axle sensor 26. One axle sensor suitable for use with the invention is made by Honigmann and sold under the trade name RFS 150. Each axle sensor 26 has a spindle 28 that is mounted in the journal bearing 24 so that it rotates with the stitcher roller and is able to sense radial forces. The support end 30 of the axle sensor is mounted to a support mount 32 of the frame 34 of the stitcher roller. Thus, as the stitcher roller performs its stitching operation to apply pressure to the tread of the green tire, the axle sensors measure the radial force variation as the green tire rotates. Figure 3 illustrates a schematic of a cured or green tire 64 undergoing rotation 66, and the direction of the radial force 68 which is in the tire's radial direction. As the tire rotates, the radial force may vary along the circumference. Figure 3 also illustrates the lateral force 70 and aft force direction 72.

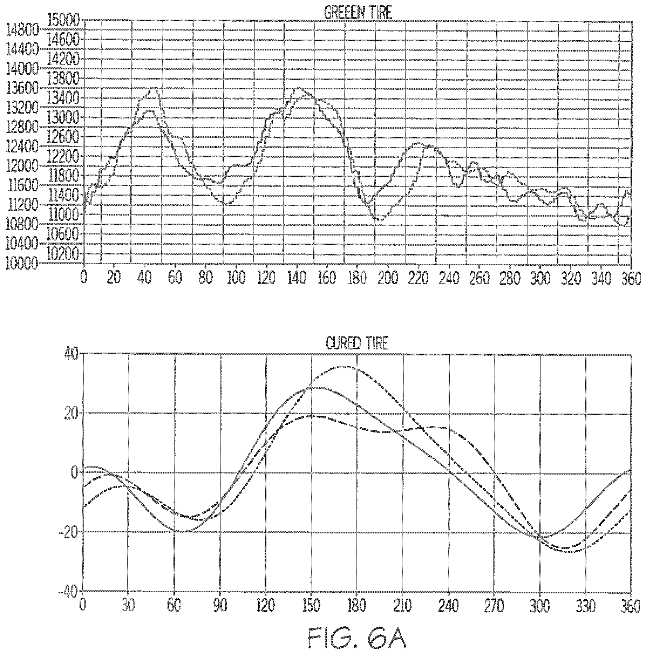

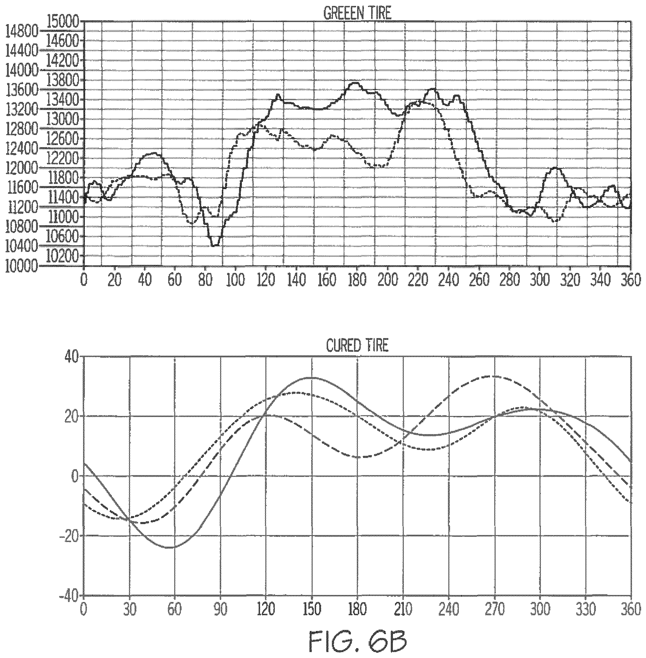

Figure 6A and Figure 6B illustrate experimental data of two different green tires, and the resultant radial force measurements across the centerline of the green tire. Figures 6A and 6B also illustrate the radial force measurements across the centerline of a cured tire. The cured tire results are comparative with the green tire results. Thus, an alert can be set should the radial force variation exceed a set threshold value, so that an operator can adjust the build properties of the tire.

While the above-described stitcher roll assembly was mounted in a transfer ring, the stitcher roll assembly may be mounted in other locations, and also be a stand-alone unit located adjacent to a tire building drum.

## Claims

1. A method of determining the force variation on a green tire (64) using a roller assembly (20) comprising a pressure roller (22), the method comprising the steps of: forming a green tire (64) having a tread and belt assembly, stitching the outer surface of the tread using the pressure roller (22), the method being **characterised by** measuring the radial force by a sensor (26) mounted in the roller assembly (20).

2. The method of claim 1 wherein the sensor (26) is mounted in the pressure roller (22).

3. The method of claim 1 or 2 wherein a radial force (68) is measured.

4. The method of at least one of the previous claims wherein a lateral force (70) is measured.

5. The method of at least one of the previous claims wherein the sensor (26) is an axle sensor.

6. The method of at least one of the previous claims wherein a radial force threshold is set to a predetermined acceptable range, and a system alert is sounded when the radial force measurement is not within the acceptable range.

7. The method of at least one of the previous claims wherein a radial force threshold is set to a predetermined limit, and wherein a system alert is sounded when the radial force measurement exceeds the limit.

8. The method of at least one of the previous claims wherein if the radial force measurement is not within the acceptable range, the tire building process is adjusted.

9. An apparatus for building tires, the apparatus comprising a tire building drum (14) and a stitching device (20), wherein the stitching device (20) comprises a pressure roller (22) rotatably mounted in a first and second bearing (24) located on each end of the pressure roller (22), the apparatus being **characterised by** a first and second axle sensor (26), each axle sensor having a spindle (28) mounted within a respective bearing (24) for measuring forces on the pressure roller (22).

10. The apparatus of claim 9 further including a transfer ring (16).

11. The apparatus of claim 10 wherein the pressure roller (22) is mounted on the transfer ring (16).

12. The apparatus of claim 9 or 10 wherein one or both of the axle sensors (26) are configured to measure a radial force (68) of the pressure roller (22).

13. The apparatus of at least one of the claims 9 to 12, further comprising an alert means.

14. The apparatus of at least one of the claims 9 to 13, wherein one or both of the axle sensors (26) are configured to measure in real time, and wherein the apparatus is configured to send an alert is sent to an operator, if a measured radial force exceeds a predefined limit.

## Patentansprüche

1. Verfahren zur Ermittlung der Kraftvariation an einem unvulkanisierten Reifen (64) unter Verwendung einer Rollenanordnung (20), die eine Andruckrolle (22) umfasst, wobei das Verfahren die Schritte umfasst: das Bilden eines unvulkanisierten Reifens (64), der eine Lauffläche und eine Gürtelanordnung hat; das Andrücken der Außenfläche der Lauffläche unter Verwendung der Andruckrolle (22), wobei das Verfahren durch das Messen der Radialkraft mittels eines in der Rollenanordnung (20) gelagerten Sensors (26) gekennzeichnet ist.

2. Verfahren nach Anspruch 1, wobei der Sensor (26) in der Andruckrolle (22) gelagert ist.

3. Verfahren nach Anspruch 1 oder 2, wobei eine Radialkraft (68) gemessen wird.

4. Verfahren nach mindestens einem der vorhergehenden Ansprüche, wobei eine Querkraft (70) gemessen wird.

5. Verfahren nach mindestens einem der vorhergehenden Ansprüche, wobei der Sensor (26) ein Achssensor ist.

6. Verfahren nach mindestens einem der vorhergehenden Ansprüche, wobei eine Radialkraftschwelle auf einen vorgegebenen zulässigen Bereich eingestellt wird, und ein Systemalarm ertönt, wenn die Radialkraftmessung nicht innerhalb des zulässigen Bereichs liegt.

7. Verfahren nach mindestens einem der vorhergehenden Ansprüche, wobei eine radiale Kraftschwelle auf eine vorbestimmte Grenze eingestellt ist, und wobei ein Systemalarm ertönt, wenn die radiale Kraftmessung die Grenze überschreitet.

8. Verfahren nach mindestens einem der vorhergehenden Ansprüche, wobei, wenn die Radialkraftmessung nicht im akzeptablen Bereich liegt, der Reifenaufbauprozess angepasst wird.

9. Vorrichtung zum Reifenbau, wobei die Vorrichtung eine Reifenbautrommel (14) und eine Anpressvorrichtung (20) umfasst, wobei die Anpressvorrichtung (20) eine in einem ersten und zweiten Lager (24), die sich an jedem Ende der Andruckrolle (22) befinden, drehbar gelagerte Andruckrolle (22) umfasst, wobei die Vorrichtung durch einen ersten und zweiten Achssensor (26) gekennzeichnet ist, wobei jeder Achssensor eine in einem jeweiligen Lager (24) gelagerte Spindel (28) zur Messung von Kräften an der Andruckrolle (22) aufweist.

10. Vorrichtung nach Anspruch 9, die weiterhin einen Übertragungsring (16) umfasst.

11. Vorrichtung nach Anspruch 10, wobei die Andruckrolle (22) auf dem Transferring (16) montiert ist.

12. Vorrichtung nach Anspruch 9 oder 10, wobei einer oder beide der Achssensoren (26) zur Messung einer Radialkraft (68) der Andruckrolle (22) ausgebildet sind.

13. Vorrichtung mindestens eines der Ansprüche 9 bis 12, die ferner ein Warnmittel umfasst.

14. Vorrichtung nach mindestens einem der Ansprüche 9 bis 13, wobei einer oder beide der Achssensoren (26) zum Messen in Echtzeit konfiguriert sind, und wobei die Vorrichtung zum Senden eines Alarms an einen Bediener konfiguriert ist, wenn eine gemessene Radialkraft eine vordefinierte Grenze überschreitet.

## Revendications

1. Procédé de détermination d'une variation de force sur un bandage pneumatique non vulcanisé (64) en utilisant un assemblage de rouleau (20) qui comprend un rouleau de pression (22), le procédé comprenant les étapes dans lesquelles : on forme un bandage pneumatique non vulcanisé (64) qui possède un assemblage de bande de roulement et de ceinture ; on presse la surface externe de la bande de roulement en utilisant le rouleau de pression (22) ; le procédé étant **caractérisé par** le fait de : mesurer la force radiale par l'intermédiaire d'un capteur (26) qui est monté dans l'assemblage de rouleau (20).

2. Procédé selon la revendication 1, dans lequel le capteur (26) est monté dans le rouleau de pression (22).

3. Procédé selon la revendication 1 ou 2, dans lequel on mesure une force radiale (68).

4. Procédé selon au moins une des revendications précédentes, dans lequel on mesure une force transversale (70).

5. Procédé selon au moins une des revendications précédentes, dans lequel le capteur (26) est un capteur d'essieu.

6. Procédé selon au moins une des revendications précédentes, dans lequel on règle un seuil de force radiale à une plage acceptable qui a été prédéterminée et une alerte de système se fait entendre lorsque la mesure de la force radiale n'est pas reprise au sein de la plage acceptable.

7. Procédé selon au moins une des revendications précédentes, dans lequel un seuil de force radiale est établi jusqu'à une limite qui a été prédéterminée, et dans lequel une alerte système se fait entendre lorsque la mesure de la force radiale dépasse la limite.

8. Procédé selon au moins une des revendications précédentes, dans lequel, lorsque la mesure de la force radiale n'est pas reprise dans la plage acceptable, le processus de confection du bandage pneumatique est adapté.

9. Appareil destiné à la confection de bandages pneumatiques, l'appareil comprenant un tambour de confection de bandage pneumatique (14) et un dispositif de pression (20) ; dans lequel le dispositif de pression (20) comprend un rouleau de pression (22) qui est monté en rotation dans un premier et un deuxième pallier (24) situés à chaque extrémité du rouleau de pression (22), l'appareil étant **caractérisé par** un premier et un deuxième capteur d'essieu (26), chaque capteur d'essieu possédant un arbre (28) monté au sein d'un palier respectif (24), qui est destiné à mesurer les forces s'exerçant sur le rouleau de pression (22).

10. Appareil selon la revendication 9, qui englobe en outre un anneau de transfert (16).

11. Appareil selon la revendication 10, dans lequel le rouleau de pression (22) est monté sur l'anneau de transfert (16).

12. Appareil selon la revendication 9 ou 10, dans lequel un des capteurs d'essieu (26) ou les deux est/sont configuré(s) pour mesurer une force radiale (68) du rouleau de pression (22).

13. Appareil selon au moins une des revendications 9 à 12, qui comprend en outre un moyen d'alerte.

14. Appareil selon au moins une des revendications 9 à 13, dans lequel un des capteurs d'essieu (26) ou les deux est/sont configuré(s) pour effectuer des mesures en temps réel, et dans lequel l'appareil est configuré pour envoyer une alerte à un opérateur, lorsqu'une force radiale qui a été mesurée dépasse une limite qui a été prédéfinie.
